# EUROPEAN PATENT APPLICATION

(11) **EP 3 006 536 A1**
(43) Date of publication of application: **13.04.2016**
(21) Application number: 14188283.7
(22) Date of filing: 09.10.2014
(51) Int. Cl.: C09K 3/18

(54) **Anti-icing compositions and their use**

(71) Applicant: Noice S.r.l., 31011 Asolo (TV) (IT)
(72) Inventor: Tosoni, Raffaella Amabile, 31011 Asolo (TV) (IT)
(74) Representative: Bertuccio, Silvia

(57) **Abstract**

The present invention relates to anti-freezing compositions and their use to prevent and/or remove the formation of ice on various surfaces.

## Description

### Field of invention

The present invention relates to anti-freezing compositions useful to prevent and/or remove the formation of ice on surfaces of various types.

### State of the art

It is known in the prior art that different kinds of organic and inorganic salts can be used to prevent the formation of ice and/or eliminate ice from surfaces of various types.

The salts most commonly used on roads and motorways are, for example, sodium chloride and calcium chloride.

On airport runways, current international regulations prohibit the use of alkali metal or alkaline-earth chlorides (such as sodium chloride and calcium chloride) because of their strongly corrosive effect, for example on aircraft. Even if other ingredients are suitably added, said salts maintain a corrosive effect which prevents them from passing approval tests.

However, organic acid salts such as potassium formate and potassium acetate are approved for use on airport runways. Said salts can be used in solid form or in aqueous solution.
However, products based on said salts still retain a residual, albeit more limited, corrosive effect on the metal parts of aircraft, in particular on the braking system, where high temperatures are reached.
Moreover, surfaces treated with said known products present a disadvantageous slipperiness.

There is consequently a need to identify alternative compositions to prevent and/or remove the formation of ice, which do not have the disadvantages of known compositions.

### Summary of the invention

The present invention relates to aqueous anti-freezing compositions comprising:
- at least one alkali or alkaline-earth metal salt of an organic acid,
- at least one anti-corrosion additive,
- at least one non-slip additive,
- at least one pH corrector,
having a pH ranging between 7 and 9.

The invention also relates to the use of the anti-freezing compositions to prevent and/or remove the formation of ice on driving and/or walking surfaces.

### Description of the invention

The present invention relates to aqueous anti-freezing compositions comprising:
- at least one alkali or alkaline-earth metal salt of an organic acid,
- at least one anti-corrosion additive,
- at least one non-slip additive,
- at least one pH corrector.

The alkali or alkaline-earth metal salt of an organic acid can be selected from potassium formate, potassium acetate, calcium formate and calcium acetate, sodium formate and sodium acetate; it is preferably potassium acetate or potassium formate, and even more preferably potassium acetate.

The anti-corrosion additive is a hydroxylated amine; in particular, it is preferably 2-amino-2-methyl-1-propanol, monoethanolamine, diethanolamine, triethanolamine.

Particularly preferred are tertiary amines, such as triethanolamine.

The non-slip additive is a polyhydroxylated alcohol; in particular, it is preferably glycerin.

The pH corrector is selected from a mono-, bi-, tri- or polycarboxylic organic acid; it is preferably citric acid, acetic acid, formic acid or benzoic acid; even more preferably the pH corrector is citric acid.

The at least one alkali or alkaline-earth metal salt of an organic acid can range from 10% w/w to 50% w/w of the composition, preferably from 40% w/w to 50% w/w, and even more preferably amounts 45% w/w.

Each additive can range from 3% w/w to 10% w/w of the composition, preferably from 2% w/w to 4% w/w; even more preferably the amount of each additive is equal to 3% w/w.

The aqueous anti-freezing compositions are characterised by a pH ranging between 7 and 9, preferably between 7.5 and 8.

It has now surprisingly been found that the anti-freezing compositions according to the invention are useful to prevent and/or eliminate ice formation, with better non-slip and anti-corrosion characteristics than those of known compositions.

The compositions according to the invention have proved effective up to the temperature of -40°C.

It has surprisingly been found that correcting the pH of the aqueous compositions according to the invention further reduces the corrosive effect, and above all the slipperiness of the surfaces treated.

In particular, the compositions according to the invention are useful to prevention frosting and/or freezing of driving and walking surfaces.

The compositions according to the invention can be applied to all types of flooring, such as asphalt, terracotta, granite, marble, brick, tiles, wood or concrete.

Said compositions are suitable, for example, for the treatment of roads, motorways, airports, sidewalks, etc.

Moreover, the anti-freezing compositions according to the invention are not corrosive, even at high temperatures, on metal surfaces such as steel, aluminium, copper, brass, etc.

It has been found that the corrosive power of the product in contact with an anodised aluminium plate for a week is comparable to the corrosive power of demineralised water.

These compositions can therefore be used on airport runways, as even when they come into contact with the metal parts of the aircraft, for example during taxiing, they are not corrosive on said surfaces, even on those of the braking system, where high temperatures are reached.

Surfaces treated with the compositions according to the invention present a homogenous coefficient of friction, comparable with that of the same surfaces when wet, and consequently reduced slipperiness.

The treatment therefore inhibits slipping, sliding or skidding of persons and vehicles on the treated surfaces.

According to a preferred embodiment of the invention, the anti-freezing compositions are applied in the amount of 30 g/m². The dose can vary according to the type of surface to be treated and the weather conditions.

The anti-freezing compositions are in liquid form and can be applied, for example, with fixed or mobile sprinkler systems, with gravity or pressurised sprinklers, which may be manual or electronically controlled, such as spraying machines.

The examples reported below further illustrate the invention.

### Examples

### Formulation example 1

The anti-freezing composition according to the invention contains, by weight:
- 45% potassium acetate,
- 3% triethanolamine,
- 3% glycerin,
- citric acid q.s. to buffer to pH 7.5 - 8.0,
- water q.s. to 100%.

### Formulation example 2

The anti-freezing composition according to the invention contains, by weight:
- 45% potassium formate,
- 3% triethanolamine,
- 3% glycerin,
- citric acid q.s. to buffer to pH 7.5 - 8.0,
- water q.s. to 100%.

### Experimental example

### Evaluation of anti-freezing effect

The freezing point of the solution described in Example 1 was measured and proved to be about -40°C.

### Anti-corrosion effect

The product was tested using the US ASTM standard, which involves prolonged contact between the product and a metal plate at the temperature of 38°C.

The weight variation in the metal due to corrosion was evaluated after a week.

The solution of Example 1 presented corrosion comparable with demineralised water, and ten times lower than known products containing chloride salts.

### Non-slip effect

The non-slip effect was evaluated by determining the static and dynamic friction values in a system consisting of a flat surface wetted with anti-freezing liquid in contact with a rubber surface.

The friction values obtained for the product are comparable with the values obtained with the surface wetted only with water, excluding the phenomenon of aquaplaning.

## Claims

1. Aqueous anti-freezing composition comprising:
- at least one alkali or alkaline-earth metal salt of an organic acid,
- at least one anti-corrosion additive,
- at least one non-slip additive,
- at least one pH corrector,
having a pH ranging from 7 to 9.

2. Anti-freezing composition according to claim 1, comprising:
- at least one alkali or alkaline-earth metal salt of an organic acid,
- at least one hydroxylated amine,
- at least one polyhydroxylated alcohol,
- at least one pH corrector.

3. Anti-freezing composition according to claim 1 or 2, wherein the alkali or alkaline-earth metal salt of an organic acid is selected from potassium formate, potassium acetate, calcium formate, calcium acetate, sodium formate and sodium acetate.

4. Anti-freezing composition according to claim 3, wherein the salt is potassium acetate.

5. Anti-freezing composition according to claims 1-4, wherein the anti-corrosion additive is a hydroxylated amine selected from the group consisting of 2-amino-2-metlryl-1-propanol, monoethanolamine, diethanolamine and triethanolamine.

6. Anti-freezing composition according to claim 5, wherein the hydroxylated amine is triethanolamine.

7. Anti-freezing_composition according to claims 1-6, wherein the non-slip additive is glycerin.

8. Anti-freezing composition according to claims 1-7, wherein the pH corrector is selected from a mono-, bi-, tri- or polycarboxylic organic acid.

9. Anti-freezing composition according to claim 8, wherein the acid is selected from the group consisting of citric acid, acetic acid, formic acid and benzoic acid.

10. Anti-freezing composition according to claim 9, wherein the acid is citric acid.

11. Anti-freezing composition according to claims 1-10, wherein the pH ranges from 7.5 to 8.

12. Anti-freezing composition according to claims 1-11, wherein the content of the at least one alkali or alkaline-earth metal salt of an organic acid ranges from 10% w/w to 50% w/w, preferably from 40% w/w to 50% w/w, and even more preferably is 45% w/w.

13. Anti-freezing composition according to claims 1-12, wherein the content of the at least one anti-corrosion additive and at least one non-slip additive ranges, for each one, from 3% w/w to 10% w/w, preferably from 2% w/w to 4% w/w, and more preferably is 3% w/w.

14. Use of an anti-freezing composition according to claims 1-13 for preventing and/or removing ice formation on driving and walking surfaces.

15. Use according to claim 14, wherein the surface is an airport runway.
